# EUROPEAN PATENT SPECIFICATION

(11) **EP 2 928 742 B1**
(45) Date of publication and mention of the grant of the patent: **05.02.2020**
(21) Application number: 13811352.7
(22) Date of filing: 05.12.2013
(51) Int. Cl.: B60W 10/08, F02B 19/00

(54) **MANAGING EFFICIENCY OF AN ENGINE-DRIVEN ELECTRIC GENERATOR**
VERWALTUNG DER EFFIZIENZ EINES MOTORGETRIEBENEN ELEKTRISCHEN GENERATORS
GESTION DE RENDEMENT D'UN GÉNÉRATEUR ÉLECTRIQUE ENTRAÎNÉ PAR UN MOTEUR À COMBUSTION

(30) Priority: 05.12.2012 US 201213705426
(43) Date of publication of application: 14.10.2015
(73) Proprietor: Deif A/S, 7800 Skive (DK)
(72) Inventor: STERREGAARD, Claes Høll, DK-7800 Skive (DK); EVANS, Steven E., DK-7800 Skive (DK); CHRISTENSEN, Søren Dahl, DK-7800 Skive (DK); SCHMIDT, Allan, DK-7800 Skive (DK); CAMPION, Edmund M., Jacksonville, Florida 32224 (US)
(74) Representative: Guardian IP Consulting I/S
(86) International application number: PCT/DK2013/050413
(87) International publication number: WO 2014/086370

(56) References cited:
- EP-A2- 1 013 498
- WO-A2-2012/135258
- US-A1- 2010 300 405

## Description

### BACKGROUND

Electric power generators are operated as a backup electricity source for critical facilities such as hospitals in the event of an outage. Power generators are also operated in remote locations which cannot be readily connected to the power grid infrastructure (e.g., located "off-grid").

While alternative power sources are becoming more commonplace (e.g., solar panel and wind turbine installations), electric power generators that burn carbon-based fuels are still the predominant means of providing a reliable source of backup, grid-supplement and/or off-grid electricity. One example is WO 2012/135258. The term "carbon-based fuels" includes for example, but is not limited to, dry gas such as hydrogen, methane or butane; wet gas such as petrol/gasoline; and oil fuels such as diesel or heavy fuel oil.

Given the seemingly ever-increasing costs of carbon-based fuel, and customer sensitivities to variable operating costs, a stronger solution is needed to provide a reliable source of backup, grid-supplement and/or off-grid electricity while effectively managing operating costs.

An object of the invention is to increase the effectivity of engine-driven electric generator. A further object is to reduce fuel consumption of the engine driving the electric generator and hereby reduce pollution.

These objects according to claim 1 are fulfilled by a method of managing an engine-driven electric generator, comprising:
populating an efficiency database with fuel provided to an engine and electrical power output data from the engine-driven electric generator;
receiving a desired electrical power output of the engine-driven electric generator; and
adjusting fuel provided to the engine-driven electric generator to generate the desired electrical power output using the efficiency database.

Here it is achieved that gen-set that is starting to operate automatically in an optimized set of operational parameters. These parameters for operation are then performing a limiting area for delivered electrical power in relation to actual fuel consumption. Because the gen-set will start to regulate in the direction of the optimal parameters, the production of electrical power is performed by the start-up instructions so that pollution is limited and optimal production of electricity is performed in relation to the fuel consumption. In operation the generated electric power will be used for search the database for the optimal supply of fuel to the engine. The engine will thereafter start to adjust the delivered power into the optimal generated electric power measured at the generator. During operation the power demand will probably change and the system will have to search for new values in the database in order to optimize the fuel consumption. Hereby can the gen-set for different power production always be regulated into optimal fuel consumption. Once that the database has been generated for one type of gen-set, the same database could probably be used in several other gen-sets that are operating somewhere else in other kinds of power plants. Typical the gen-set will work as emergency power supply or they will operate as temporary power supplies after breakdown in infrastructure somewhere in the world. In situations where a number of gen-sets have to be installed in a hurry it is highly effective if the gen-set automatic contains a database and contains automatic regulation of optimal power production. Not only will the saved fuel reduce the cost of operation but the reduced fuel consumption will in the same way be a benefit for the environment because no carbon dioxide is generated for the fuel that is saved.

By the preferred embodiment for the invention can the populating of the efficiency database be done during an initialization operation using predetermined data. In a situation where a new gen-set is started at first, operation by different power demand will give the gen-set the possibility of producing an actual data set for the actual gen-set. Hereby it can be achieved that if a gen-set is starting to operate under new environmental conditions, for example somewhere else in the world, intake air can have different temperature and content of humidity. Therefore, it can be rather important that by initialization of an operation the gen-set will search for optimized operational parameters.

By the preferred embodiment for the invention can the populating of the efficiency database be dynamic and continuous self-populating during operation of the engine-driven electric generator. During continuous operation of a gen-set some operational parameters will change because of the operation such as temperature of an engine will change up to a maximum level. Also in generators temperature of copper windings in the generator will change by temperature. Therefore because some of the optimal parameters change a bit during operations the populating of the database can continuously be adjusted into new and maybe more effective parameter sets for the operation.

By the preferred embodiment for the invention can adjusting fuel provided optimizes efficient operation of the engine-driven electric generator for fuel consumption while still providing the desired power output within a predetermined range. In some situations it is possible to let a generator deliver a constant power to a grid and slowly reduce the power consumption of an engine without any change in the power that is delivered. Probably by this system the database will know in a given situation that it is possible to some degree to reduce the power consumption but remain the same yield in the generated electric power.

By the preferred embodiment for the invention receiving a desired electrical power output within specified tolerances of the desired electrical power output, where related data is stored in the data base. In some way of operation the desired electrical power output can be used as an input into the database to find the optimal power consumption. For a given electrical power demand it is possible to set up defined tolerances for the power consumption. Hereafter the system can be optimized because inside specified tolerances adjustment of the fuel consumption is possible and operation will still be in a way delivering the correct electrical power output.

By the preferred embodiment for the invention, the method provided further comprises:
determining a maximum/minimum value for the desired electrical power output;
finding a new set point within the maximum/minimum value in the efficiency database; and
substituting the new set point from the efficiency database with a current set point operating the engine-driven electric generator, when the new set point corresponds to a higher operating efficiency of the engine-driven electric generator than the current set point. Hereby it can be achieved that a higher effectivity of the gen-set is achieved simply by performing a self-programming of the system. Inside limitations set from the computer system optimized working conditions are necessary if the highest yield in electric power related to the use of fuel for operating the gen-set. By continuously optimizing the working conditions it is possible inside limitations that is defined maybe from the electric consumer systems to achieve the highest possible yield and thereby the lowest possible pollution.

This invention as defined in claim 4 comprises a system for managing an engine-driven electric generator, which system comprising:
an efficiency calculator configured to populate an efficiency database with fuel provided and electrical power output data for efficient operation of the engine-driven electric generator; and
a controller configured to issue a new set point for fuel provided to the engine-driven electric generator for efficient operation while generating the desired electrical power output.

By the system as disclosed it is possible for the system to perform self-programming of new set points. This is very important in dynamic systems where for example environmental conditions changed such as temperature and humidity in surrounding air has influence of the actual operational parameters in a gen-set. Therefore local adjustment of set points is necessary if optimal conditions are necessary. In the optimal working conditions the fuel consumption in relation to the power output is the lowest possible.

By the preferred embodiment for the invention can the system perform efficiency calculator determines the new set point by:
determining maximum/minimum values for the desired electrical power output;
finding the new set point within the maximum/minimum value in the efficiency database. Hereby it is achieved that outside conditions are defined in maximum/minimum values for power output and the system as such tries inside these limitations to optimize a plurality of different set points for operation which set points are calculated in the system as a road of set points where the power yield of electric power compared to the fuel consumption is the optimal situation for a given set point.

By the preferred embodiment for the invention can the controller adjusts fuel provided to the engine-driven electric generator by:
substituting the new set point from the efficiency database with a current set point operating the engine-driven electric generator, when the new set point corresponds to a higher operating efficiency of the engine-driven electric generator than the current set point. Hereby it is achieved that a continuously adjustment of the set points is performed. This is rather important because weather conditions can change and thereby external parameters such as temperature and humidity in air will change but also in operation the internal temperature in the gen-set will change and in that way have some influence of the optimal set point. By the dynamic set point regulations optimal set points will always be achieved in normal operation.

By the preferred embodiment for the invention can the efficiency calculator determines the set point on a substantially continuous basis during operation of the engine-driven electric generator. Hereby it is achieved that even changes in power demand from a connected power grid or power consumer, the system is able to continuously adjust the set point in order to remain in an optimal operational condition.

By the preferred embodiment for the invention can the system, further comprise a digital engine control unit or an analog transmitter to provide the fuel data for the efficiency database. Hereby the system can continuously receive information about fuel consumption.

By the preferred embodiment for the invention can the system further comprise an electrical metering device to provide the electrical power output data for the efficiency database. Hereby the system can have access to the actual electrical power production.

By the preferred embodiment for the invention can the system comprise a stability calculator employing an averaging algorithm to accommodate variable efficiencies during accelerating and decelerating the engine-driven electric generator. Hereby it can be achieved that the gen-set which often are to be used as emergency power supplies are controlled by an algorithm also during a start-up acceleration of the gen-set into maybe a frequency synchronization of the power that is generated and first after synchronization is switched onto the grid or towards a supplier. But again after shut-down the gen-set cannot just be switched off. It is optimal that a control algorithm takes care of the deceleration of the gen-set so that a shut-down is performed in a slow manner to avoid any buildup of heat inside the generator or inside the engine.

By the preferred embodiment for the invention can the stability calculator wait for an efficiency reading to stabilize before determining an efficiency reading is valid for the efficiency database when values are changing. Hereby it can be achieved that before a new set point is stored in a database, this set point has to be controlled. In that way it can be achieved that only valid set points are stored in the database.

By the preferred embodiment for the invention can the system further comprise a regulator to control generating the desired electrical power output. Hereby it can be achieved that a regulation of the power that is delivered to the generator is in control in relation to the actual power at the output.

By the preferred embodiment for the invention can the system further comprise a limit control on the regulator to maintain generating the desired electrical power output within an acceptable range specified by an operator. By defining a limit the automatic regulations of set points will regulate inside the limitations that are set by maybe an operator or maybe coming from a grid or the power consumer.

By the preferred embodiment for the invention can a system for managing an engine-driven electric generator, comprise:
means for storing fuel data and electrical power output data for the engine-driven electric generator;
means for receiving a desired electrical power output of the engine-driven electric generator; and
means for using the efficiency database to dynamically adjust fuel provided to generate the desired electrical power output while optimizing fuel efficiency of the engine-driven electric generator. Hereby a system operating highly effective is achieved which could be used in all kind of gen-sets that are possible.

By the preferred embodiment for the invention can the system, further comprise means for determining a new set point to optimize fuel efficiency of the engine-driven electric generator. Hereby it can be achieved that the system automatic optimizes its effectivity by continuously searching for new set points.

By the preferred embodiment for the invention can the system further comprise means for finding a new set point within a maximum/minimum value in the efficiency database, the new set point optimizing fuel efficiency of the engine-driven electric generator. In a system where limitations of maximum and minimum values are set to the gen-set from maybe a consumer, the new set points of course have to be found inside the limitations.

By the preferred embodiment for the invention can the system comprise means for substituting a new set point from the efficiency database with a current set point operating the engine-driven electric generator, wherein the new set point corresponds to a higher operating efficiency of the engine-driven electric generator than the current set point. Hereby the set point can continuously be optimized.

### BRIEF DESCRIPTION OF THE DRAWINGS

**Figure 1** is a high-level illustration of an example engine-driven electric generator environment in which an efficiency management system may be utilized.
**Figure 2** is a schematic diagram illustrating implementation of an example efficiency management system for an engine-driven electric generator.
**Figure 3** is a process flow diagram 300 illustrating an example architecture to manage efficiency of an engine-driven electric generator.
**Figure 4a** is a plot of example data which may be stored in an efficiency database.
**Figure 4b** is another plot of example data which may be stored in an efficiency database.
**Figure 5** is a flowchart illustrating example operations which may be implemented to manage efficiency of an engine-driven electric generator.

### DETAILED DESCRIPTION

Electric power generators that burn carbon-based fuels are used predominantly for providing a reliable source of backup, grid-supplement and/or off-grid electricity. These electric power generators often operate reciprocating engines burning carbon-based fuels. Efficiency of a reciprocating engine is a function of the fuel delivered to the engine relative to the rotational energy the engine delivers to the shaft. In terms of an electric power generator, and more specifically, alternating current generators, the efficiency of the generator varies with power output.

The systems and methods described herein manage operation of an engine-driven electric generator (or "gen-set") to increase or even optimize efficiency for desired output. The term "gen-set" is used herein to describe the combination of an engine and the electrical generator driven by the engine. Individual gen-sets operating in parallel with other sources may be operated at a set point (e.g., electrical output measured in kilowatts or KW). As used herein, the term "efficiency" (unless specifically stated otherwise) is not used to refer to engine efficiency, but rather efficiency of the gen-set. In an example, gen-set efficiency refers to the rotational energy required to produce a given quantity of electricity. In general, efficiency increases as fuel provided to the engine (e.g., usage or consumption by the engine) decreases and electricity production increases.

The systems and methods described herein may be utilized to reduce fuel consumption of the gen-set by adjusting the set point to a more efficient set point. In an example, the systems and methods may be implemented for a single gen-set operated in parallel with a utility (e.g., the "grid"). The term "set point" generally refers to an operator-entered value (e.g., the desired output) and may be entered as a unit of electrical power (e.g., KW). For example, the operator may input (a) the power output desired (e.g., demand, based on load) and (b) a window or tolerance.

Efficiency may be measured by measuring the fuel delivered to the gen-set's reciprocating engine, and comparing the fuel delivery to electrical power being produced by the gen-set's generator. Efficiency information may be stored and used as a set point for a power regulator. An individual gen-set may then be configured to operate at its most efficient level by using the fuel consumption data of the engine and the electrical power produced by the generator to determine a set point to enhance efficiency of the gen-set.

Operating data may be stored in memory as a reference for future operations. Thus, the system may continuously compensate for changes in actual operating conditions, such as, but not limited to variations in fuel quality, combustion air quality, location (e.g., altitude), environmental conditions (e.g., seasonal and weather-related changes), and age-based factors of the machinery.

In an example, the systems and methods described herein may be applied to operation of a reciprocating engine-driven alternating current (AC) generator in a more efficient manner. As such, the systems and methods may reduce fuel consumption, reduce emissions (e.g., carbon emissions and NO_{X}), while further reducing operating and maintenance costs. The gen-set thus provides a reliable source of backup, grid-supplement and/or off-grid electricity while effectively managing operating costs.

Before continuing, it is noted that as used herein, the terms "includes" and "including" mean, but is not limited to, "includes" or "including" and "includes at least" or "including at least." The term "based on" means "based on" and "based at least in part on."

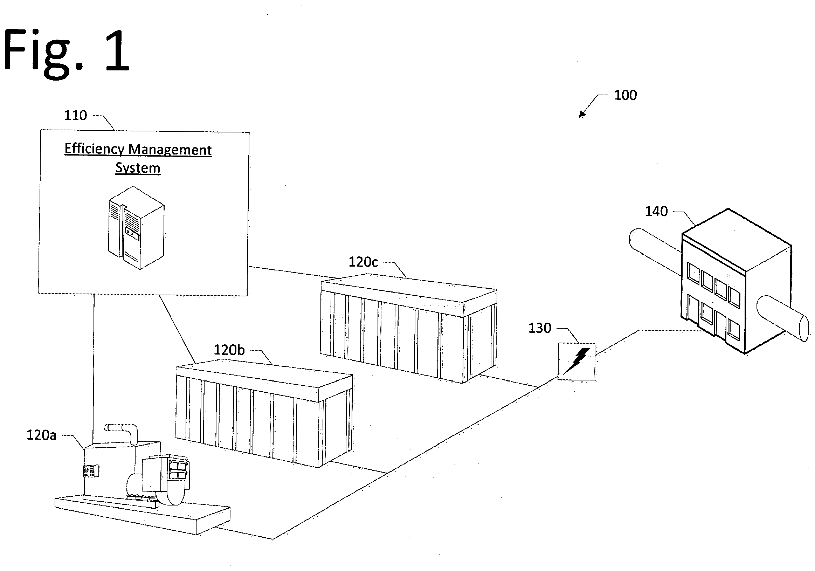

**Figure 1** is a high-level illustration of an example engine-driven electric generator environment 100 in which an efficiency management system 110 may be utilized. Electric power generators may provide as a backup electricity source for critical facilities in the event of an outage and/or in remote locations which cannot be readily connected to the power grid infrastructure. Although not to be considered limiting, a common use of electric power generators is illustrated in Figure 1 where the electric power generators 120a-c are generating electric power 130 (e.g., 480 volts alternating current or VAC) for a water pumping station 140. Numerous other examples of such environments 100 also exist, and the efficiency management system 110 described herein may be utilized in any such environment.

In Figure 1, an electric power generator 120a is shown as stand-alone equipment, and electric power generators 120b-c are shown as these may be housed in a container (e.g., similar to shipping containers). Other examples may include housing the electric power generators in a trailer (e.g., for easy transport) or in a dedicated facility, such as an out-building or other structure.

In an example, the electric power generator is an engine-driven electric generator (or "gen-set"). Gen-sets are a combination of an engine (or prime mover) and an electrical generator, typically mounted together to form a single piece of equipment. Fuel storage, cooling and exhaust systems are provided for the engine. Gen-sets may also include control mechanisms such as an engine governor, a voltage regulator, and a power conditioner, to name only a few examples.

The engine may be a reciprocating engine. A reciprocating engine uses one or more piston to convert pressure into rotation, similar to an internal combustion engine in a car or other vehicle. Each piston may have a cylinder, in which the fuel is introduced. The fuel is heated by ignition of an air-fuel mixture (or by contact with a heat exchanger), such that the heated fuel expands and pushes the piston inside the cylinder. The piston returns to the initial position in the cylinder by power exerted from other pistons connected on the same shaft, or by the same process on the other side of the piston. Exhaust is removed from the cylinder and the process repeats, generating rotation of a drive shaft. The drive shaft may be used in turn to power the generator.

The generator converts mechanical energy from rotation of the drive shaft into electrical energy. An alternator uses a rotating field winding and a stationary winding (the "stator") that produces alternating current (AC). The alternator may be operated at a speed corresponding to a specified frequency to produce AC. It may be necessary to accelerate the alternator to the correct speed and phase alignment to produce proper AC output for the application.

Gen-sets are available having a wide range of power ratings, and the gen-set is typically sized and selected based on the load that is being powered. But reciprocating engines operate most efficiently at output levels that are different than the rated output (so-called "nameplate" output). For example, a reciprocating engine may operate more efficiently at about 75 to 85% of the rated or full-load capacity of the engine. Electric power generators run by a reciprocating engine typically range from 80 to 98% efficient. This fairly wide range in efficiencies can lead to extremely variable operating costs.

The efficiency management system 110 may be implemented to operate the gen-set(s) 120a-c in a more efficient manner, reducing fuel consumption, carbon and other environmental emissions. The efficiency management system 110 may further reduce maintenance costs. For example, maintenance costs may be reduced by operating the gen-set in parallel with others sources (e.g., other gen-sets and/or the grid) powering one or more loads.

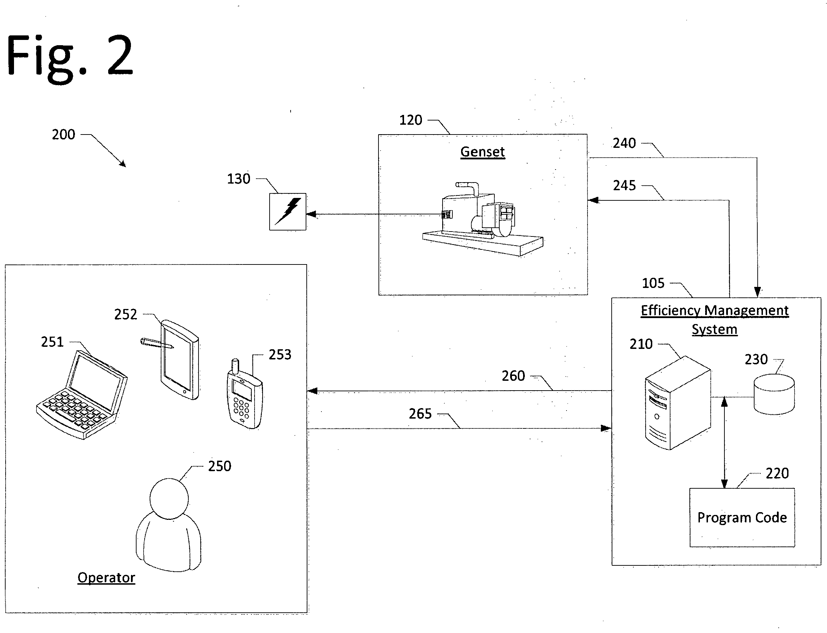

**Figure 2** is a schematic diagram 200 illustrating implementation of an example efficiency management system 110 for an engine-driven electric generator 120. The efficiency management system 110 may be implemented with any of a wide variety of devices. In an example, a computing device 210 includes sufficient processing capability to execute program code 220 stored on a computer readable media 230. The efficiency management system 110 may be provided on-site with the gen-set 120 (e.g., as part of the gen-set equipment), partially on-site, or off-site from the gen-set 120 (e.g., at a remote monitoring/control location).

The efficiency management system 110 may interface with control circuitry for the gen-set 120. For example, the efficiency management system 110 may receive operating data from the gen-set 120, as illustrated by input line 240. Example input data includes, but is not limited to, fuel consumption and electrical power output 130. The efficiency management system 110 may also provide output to the gen-set 120, as illustrated by output line 245. Example output data includes, but is not limited to, a fuel control signal which may be used to adjust (increase or decrease) fuel to the gen-set 120. The fuel control signal may also include air data (e.g., quality, flow, etc.) and/or air-to-fuel ratio for combustion.

The efficiency management system 110 may also interface with an operator 250. For example, the efficiency management system 110 may receive input from the operator 250, as illustrated by input line 260. For example, input from the operator may include a desired electrical power to be generated or output by the gen-set 120 during a given time (e.g., a "window of time"). The desired electrical power output may be constant and/or change based on any of a wide variety of different parameters (e.g., power demand, seasonal adjustments). The efficiency management system 110 may also provide output to the operator 250. Example output to the operator may include current operating conditions of the gen-set 120, efficiency data, and warnings or alerts.

Before continuing, it is noted that the computing devices and control circuitry implemented by the efficiency management system 110 and gen-set 120 are not limited in function. The computing devices may also provide other services in the efficiency management system 110. For example, the operator devices illustrated in Figure 2 may be the operator's laptop computer 251, tablet device 252, mobile device 253, or other general-purpose computing device. In addition, there is no limit to the type or amount of data that may be utilized (i.e., received, processed, and/or output) by the efficiency management system 110. In addition, the data may include unprocessed or "raw" data from control circuitry at the gen-set 120, or the data may undergo at least some level of pre-processing.

In an example, the program code 220 has access to both input from the gen-set 120 and the operator 250. For example, the program code 220 may be implemented as dedicated circuitry built-in or otherwise integrated as part of the gen-set 120. Or for example, the program code 220 may be implemented in a cloud-based service, wherein the program code is executed on at least one computing device local to the gen-set 120, but having access to the operator 250 via the Internet or dedicated cloud network.

The program code 220 may be implemented as machine readable instructions (such as but not limited to, software and/or firmware), which may be executed for performing functions of the efficiency management system 110. The machine-readable instructions may be stored on a non-transient computer readable medium and are executable by one or more processor to perform the operations described herein. It should be understood that various functions may also be implemented in control circuitry, such as but not limited to, logic circuits. For example, the efficiency management system 110 may operate on a variety of digital electronic controls including but not limited to PLC's and dedicated purpose digital controllers, any of which may operate using the algorithms described herein.

Briefly, the efficiency management system 110 receives fuel consumption data from an engine control computer (or from an external fuel control device). The efficiency management system 110 compares the fuel requirements with electricity being produced (e.g., measured in Watts or Kilowatts) by the gen-set 120. Efficiency data is stored in memory of a controller and communicated by a communication link with the other components of the efficiency management system 110. This data may be analyzed and an output issued to control fuel which efficiently runs a reciprocating engine of the gen-set 120 to drive the desired AC power output.

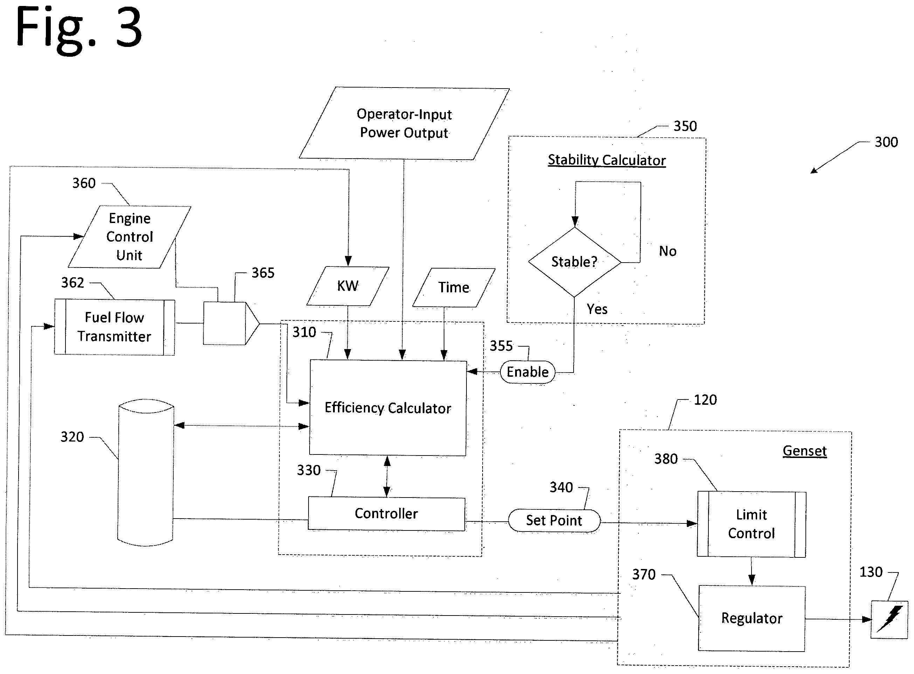

Function of the efficiency management system 110 in combination with the gen-set 120 can be better understood with reference to Figure 3. It is noted, however, that the components shown in Figure 2 are provided only for purposes of illustration of an example operating environment, and are not intended to limit implementation to any particular system. The functions described herein are not limited to any specific implementation with any particular type of program code and control circuitry.

**Figure 3** is a process flow diagram 300 illustrating an example architecture to manage efficiency of an engine-driven electric generator or gen-set. Briefly, the efficiency management system 110 may include an efficiency calculator 310 configured to populate an efficiency database 320 with fuel usage and electrical power output data for efficient operation of the engine-driven electric generator. The efficiency management system 110 may also include a controller 330 operatively associated with the efficiency calculator 310 and the efficiency database 320. The controller 330 is configured to issue a new set point 340 for fuel consumption by the gen-set for efficient operation while generating the desired electrical power output. A stability calculator 350 may employ an averaging algorithm to accommodate variable efficiencies during acceleration and deceleration the gen-set 120. For example, the stability calculator 350 may wait for an efficiency reading to stabilize before determining an efficiency reading is valid for the efficiency database when values are changing. Once the efficiency reading has stabilized, the stability calculator 350 may issue an enable signal 355 to the efficiency calculator to populate the efficiency database 320.

An electrical metering device may provide the electrical power output data of the gen-set 120 for the efficiency database 320. For example, a digital engine control unit (ECU) 360 may provide the fuel data for the efficiency database 320. ECU is a generic name for one of many engine control and protection devices that are commercially available from a variety of manufacturers. Information may be read from the ECU via a digital communications link. The ECU supplies the fuel, for example, in terms of liquid measure per unit of time (e.g., liters or gallons per minute or hour).

In another example, an analog transmitter 362 may provide the fuel data for the efficiency database 320. Analog transmitters convert the fuel volume (e.g., dry or liquid carbon based fuels, but may also include other sources of energy such as compressed gas or liquid) into an electrical signal that can be read by the efficiency calculator 310. The units of this signal may be liquid measure of fuel per unit of time or a volume of dry gas per unit of time (e.g., liters or gallons per minute or hour).

A configuration parameter may be used by selection device 365 to select the source of information, from either the ECU 360 or analog device 362. The power output of the gen-set 120 may also be available from a variety of electrical metering devices. A regulator 370 may be used to control output of the gen-set 120, for example, based on a set point. A limit control 380 on the regulator 370 may maintain generating the desired electrical power output within an acceptable range (e.g., a threshold) specified by an operator.

During operation, the efficiency calculator 310 determines the new set point 340 by determining a maximum/minimum value for the desired electrical power output. The efficiency calculator 310 finds the new set point within the maximum/minimum value in the efficiency database. The controller 330 then adjusts fuel provided to the engine-driven electric generator by issuing a signal to substituting the new set point 340 from the efficiency database 320 with a current set point operating the gen-set 120, when the new set point corresponds to a higher operating efficiency of the gen-set 120 than the current set point. In an example, the efficiency calculator 310 updates the efficiency database 320 and may also determine new set points 340 on a substantially continuous basis during operation of the gen-set 120.

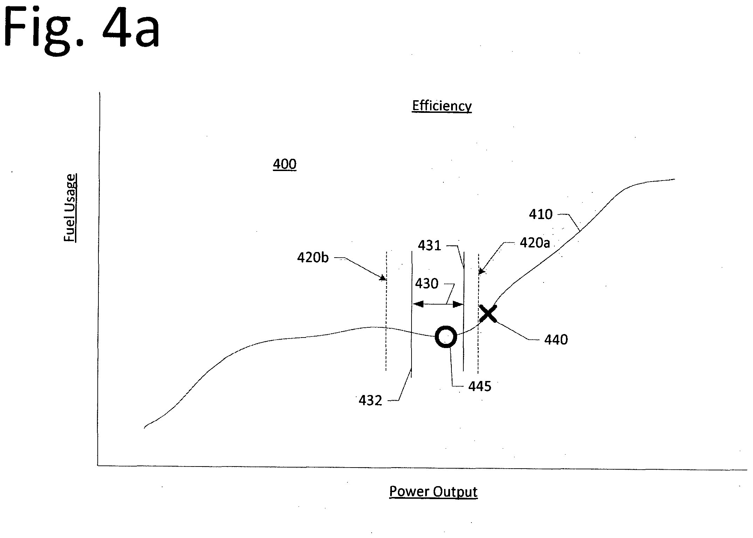

**Figure 4a** is a plot 400 of example data which may be stored in an efficiency database. The plot 400 includes data points 410 for fuel consumption or usage (shown along the y-axis) corresponding to power output (shown along the x-axis). Accordingly, the data points 410 represents efficiency data at various operating conditions of the gen-set. Fuel usage may be measured and represented in any suitable manner, for example as liters per hour (LPH). Likewise, power output may be measured and represented in any suitable manner, for example as kilowatts (KW).

The efficiency calculator processes the efficiency data from fuel consumption and power output. As described above with reference to Figure 3, fuel data is available from a variety of digital and/or analog metering devices, and power output data is available from a variety of electrical metering devices. Units of time may be available from any source of accurate time keeping, such as a clock internal to the processing device.

Efficiency calculations may vary as the gen-set 120 is increasing or decreasing acceleration, and so the readings may be checked by an averaging algorithm for consistency. If readings are changing over time, stability calculator waits until the readings are stable before determining the value is valid. Valid values of efficiency are then written into the efficiency database to be stored for use later.

It is noted that the efficiency database may be pre-populated (e.g., before executing the efficiency management system 110) with manufacturer test data and/or extrapolated from manufacturer performance specifications. In another example, populating the efficiency database is by dynamic self-populating during operation of the engine-driven electric generator. Populating the efficiency database may be both pre-populated and dynamically updated. Of course, if pre-populating of data is not handled during initializing/startup/commissioning phase of the gen-set, the efficiency management system 110 may not be brought online to adjust fuel usage until sufficient data points have been collected to populate the efficiency database for a range of operation.

Once populated, the efficiency database may include data as illustrated by plot 400. It is noted, however, that the data does not need to be populated in the efficiency database in any particular manner. That is, the efficiency database does not need to include an actual plot of data as shown in Figure 4a. In other examples, the data may be stored in tables (e.g., look-up-tables or LUTs), as arrays of data, and/or in any other format suitable to determine a set point and manage efficiency of the engine-driven electric generator.

It can be seen in Figure 4a that the power output generally increases (from left to right along the x-axis) as fuel usage increases (from bottom to top along the y-axis). The increase in power output is not necessarily on a 1:1 basis. That is, past a certain point on the plot 400, more fuel is consumed by the gen-set 120 in order to generate incrementally more electricity. Thus, the data has to be analyzed to find the most efficient operating parameters (or fuel set point).

In the illustration shown in Figure 4a, the most efficient set point is generally found in the plot 400 where there is a small dip in fuel consumption (indicated between bounds 420a-b) in the data points 410, while power output continues to increase. At this point (or points), the corresponding fuel set point optimizes efficient operation of the engine-driven electric generator for fuel consumption while providing the desired power output. Increasing the fuel beyond this set point will result in more fuel consumption, without a justifiable increase in power output (i.e., reducing efficiency of the gen-set). Further, reducing the fuel below this set point may not achieve the desired power output.

It should be noted that the desired power output may be specified within a tolerance. The tolerance is represented in Figure 4a by arrows 430 having an upper threshold 431 and a lower threshold 432. For example, the desired power output may be specified as 1000 KW +/- 20%, where 1000 KW is the desired power output and +/- 20% is the tolerance. The tolerance may be based on industry practice, specifications of the load being powered, or manually determined, to name only a few examples of defining a tolerance for a desired power output.

For purposes of illustration, the gen-set 120 may be operating at a current set point 440 (indicated by the X on plot 400). The efficiency management system 110 may determine a maximum value 431 and a minimum value 432 for the desired electrical power output. The efficiency management system 110 may then find a new set point 445 (indicated by the "O" on plot 400) within the specified tolerance 430 of the desired electrical power output. It can be seen that both the current set point 440 and the new set point 445 are within the tolerance 430 of the desired power output. But the new set point 445 has a lower fuel consumption. Thus, changing the current set point 440 to the new set point 445 will result in lower fuel consumption.

The efficiency management system 110 may then substitute the new set point 445 for the current set point 440 operating the gen-set 120. This change results in a higher operating efficiency of the gen-set 120 than was being realized by using the current set point 440.

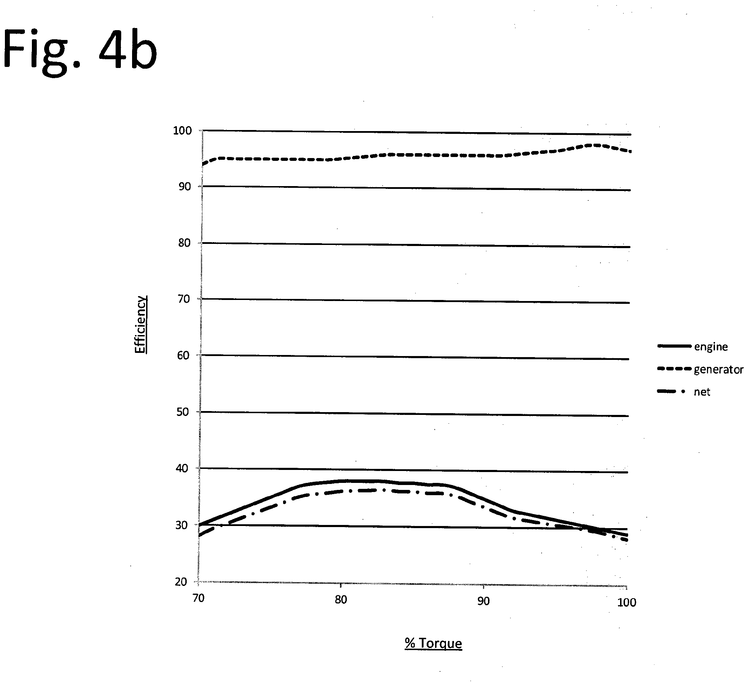

**Figure 4b** is another plot of example data which may be stored in an efficiency database. The actual data used to generate the plot 450 is shown in Table 1. It is noted that the genset cannot be overall any more efficient than the engine. By way of example, typical diesel engines top out at about 35-38% efficient at full load. These efficiencies and the data in Table 1 (illustrated in plot 450), however, are provided only by way of illustration and are not intended to be limiting.

**Table 1: Genset Efficiency Data**

| % Torque | engine | generator | net |
|---|---|---|---|
| 70 | 30 | 94 | 28.2 |
| 71 | 31 | 95 | 29.45 |
| 72 | 32 | 95 | 30.4 |
| 73 | 33 | 95 | 31.35 |
| 74 | 34 | 95 | 32.3 |
| 75 | 35 | 95 | 33.25 |
| 76 | 36 | 95 | 34.2 |
| 77 | 37 | 95 | 35.15 |
| 78 | 37.5 | 95 | 35.62 |
| 79 | 37.75 | 95 | 35.86 |
| 80 | 38 | 95.25 | 36.19 |
| 81 | 38 | 95.5 | 36.29 |
| 82 | 38 | 95.75 | 36.38 |
| 83 | 38 | 96 | 36.48 |
| 84 | 37.75 | 96 | 36.24 |
| 85 | 37.75 | 96 | 36.24 |
| 86 | 37.5 | 96 | 36 |
| 87 | 37.5 | 96 | 36 |
| 88 | 37 | 96 | 35.52 |
| 89 | 36 | 96 | 34.56 |
| 90 | 35 | 96 | 33.6 |
| 91 | 34 | 96 | 32.64 |
| 92 | 33 | 96.25 | 31.76 |
| 93 | 32.5 | 96.5 | 31.36 |
| 94 | 32 | 96.75 | 30.96 |
| 95 | 31.5 | 97 | 30.55 |
| 96 | 31 | 97.5 | 30.22 |
| 97 | 30.5 | 98 | 29.89 |
| 98 | 30 | 98 | 29.4 |
| 99 | 29.5 | 97.5 | 28.76 |
| 100 | 29 | 97 | 28.13 |

In this example, efficiency may be quantized as power in divided by power out (or power generated). The power out is determined by the engine efficiency (e.g., fuel usage divided by rotation of the engine), generator rotation divided by power output, or genset fuel consumption divided by power output.

It can be seen from the plot of the data shown in Table 1 that efficiency peaks between 80-90% torque, and hence the operations described herein may be used to target operation in this range, for example, as described above with reference to the plot shown in Figure 4a.

Before continuing, it should be noted that the examples described above are provided for purposes of illustration, and are not intended to be limiting. Other devices and/or device configurations may be utilized to carry out the operations described herein.

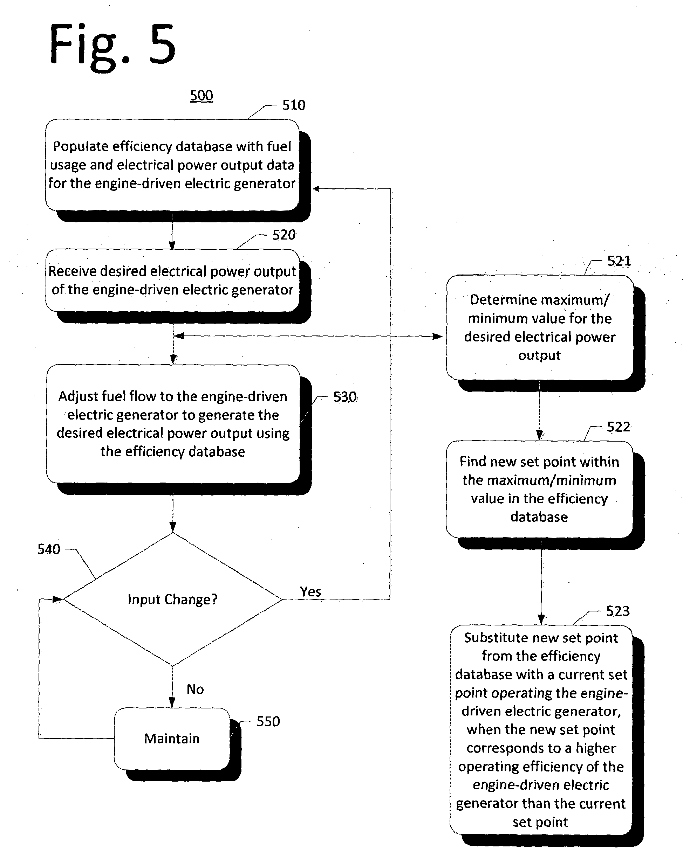

**Figure 5** is a flowchart illustrating example operations 500 which may be implemented to manage efficiency of an engine-driven electric generator. At least some of the operations 500 may be embodied as logic instructions on one or more computer-readable medium. When executed on a processor, the logic instructions cause a general purpose computing device to be programmed as a special-purpose machine that implements the described operations. In an example, the components and connections depicted in the figures may be used.

An example method of managing an engine-driven electric generator includes at operation 510, populating an efficiency database with fuel data and electrical power output data for the engine-driven electric generator. In an example, populating the efficiency database is during an initialization operation using predetermined data. Populating the efficiency database may also be by dynamic self-populating during operation of the engine-driven electric generator.

The method also includes at operation 520, receiving a desired electrical power output of the engine-driven electric generator. The desired electrical power output may include a tolerance of the desired electrical power output.

The method also includes at operation 530, adjusting fuel provided to the engine-driven electric generator to generate the desired electrical power output using the efficiency database. Adjusting fuel provided may optimize efficient operation of the engine-driven electric generator for fuel consumption while still providing the desired power output.

The method may also include a reciprocating loop, in which any input to the efficiency management system is monitored in operation 540. For example, a change of input may include operator input, such as a new desired electrical power output parameter, fuel delivery parameters, and/or efficiency data. If a change is detected, the technique may return to operation 510. If no change is detected, then the efficiency management system maintains current operations at 550 (e.g., the current set point), and continues monitoring as indicated by the loop from operation 550 to decision operation 540.

The operations shown and described herein are provided to illustrate example implementations. It is noted that the operations are not limited to the ordering shown. Still other operations may also be implemented.

For example, operation 521 determines a maximum/minimum value for the desired electrical power output. Operation 522 finds a new set point within the maximum/minimum value in the efficiency database. Operation 523 substitutes the new set point from the efficiency database with a current set point operating the engine-driven electric generator, when the new set point corresponds to a higher operating efficiency of the engine-driven electric generator than the current set point.

The operations may be implemented at least in part using an end-user interface (including but not limited to analog, digital, computer, and web-based interfaces). In an example, the operator is able to make predetermined selections, and the operations described above are implemented to manage an engine-driven electric generator. The operator can then make further selections which result in the execution of further operations. It is also noted that various of the operations described herein may be automated or partially automated.

## Claims

1. A method of managing an engine-driven electric generator, said method comprising the steps of:
populating an efficiency database with fuel provided to an engine and electrical power output data from the engine-driven electric generator;
receiving a desired electrical power output of the engine-driven electric generator, receiving specified tolerances of the desired electrical power output;
adjusting fuel provided to the engine-driven electric generator to generate the desired electrical power output within the specified tolerances of the desired electrical power output using the efficiency database to optimize efficient operation of the engine-driven electric generator for fuel consumption while still providing the desired electrical power output within the specified tolerances of the desired electrical power output
**characterized in that** the step of adjusting fuel provided further comprises the steps of:
determining a maximum/minimum value for the desired electrical power output based on the desired electrical power output and the specified tolerances;
finding a new set point for electrical power output within the maximum/minimum value in the efficiency database; and
substituting a current set point for electrical power output operating the engine-driven electric generator with the new set point for electrical power output from the efficiency database, when the new set point corresponds to a higher operating efficiency of the engine-driven electric generator than the current set point.

2. The method of claim 1, wherein populating the efficiency database is done during an initialization operation using predetermined data.

3. The method of claim 1, wherein populating the efficiency database is by dynamic and continuous self-populating during operation of the engine-driven electric generator.

4. A system for managing an engine-driven electric generator, comprising:
an efficiency calculator configured to populate an efficiency database with fuel provided and electrical power output data for efficient operation of the engine-driven electric generator; and
a controller configured to receive a desired electrical power output of the engine-driven electric generator, receive specified tolerances of the desired electrical power output; adjust fuel provided to the engine-driven electric generator to generate the desired electrical power output within the specified tolerances of the desired electrical power output using the efficiency database to optimize efficient operation of the engine driven electric generator for fuel consumption while still providing the desired electrical power output within the specified tolerances of the desired electrical power output
**characterized in that** the controller determines the new set point by:
determining maximum/minimum value for the desired electrical power output based on the desired electrical power output and the specified tolerances;
finding the new set point for electrical power output within the maximum/minimum value in the efficiency database, and **in that** the controller adjusts fuel provided to the engine-driven electric generator by:
substituting a current set point for electrical power output operating the engine-driven electric generator with the new set point for electrical power output from the efficiency database , when the new set point corresponds to a higher operating efficiency of the engine-driven electric generator than the current set point.

5. The system of claim 4, wherein the efficiency calculator determines the set point on a substantially continuous basis during operation of the engine-driven electric generator.

6. The system of claim 4, further comprising a digital engine control unit or an analog transmitter to provide the fuel data for the efficiency database.

7. The system of claim 4, further comprising an electrical metering device to provide the electrical power output data for the efficiency database.

8. The system of claim 4, further comprising a stability calculator employing an averaging algorithm to accommodate variable efficiencies during accelerating and decelerating the engine-driven electric generator.

9. The system of claim 4, wherein the stability calculator waits for an efficiency reading to stabilize before determining an efficiency reading is valid for the efficiency database when values are changing.

10. The system of claim 4, further comprising a regulator to control generating the desired electrical power output.

## Patentansprüche

1. Verfahren zum Managen eines motorbetriebenen elektrischen Generators, das Verfahren umfassend die Schritte von:
Füllen einer Effizienzdatenbank mit einem Motor zugeführten Kraftstoff- und elektrischen Ausgangsleistungsdaten des motorbetriebenen elektrischen Generators;
Empfangen einer gewünschten elektrischen Ausgangsleistung des motorbetriebenen elektrischen Generators,
Empfangen spezifizierter Toleranzen der gewünschten elektrischen Ausgangsleistung;
Einstellen des dem motorbetriebenen elektrischen Generator zugeführten Kraftstoffs, um die gewünschte elektrische Ausgangsleistung innerhalb der spezifizierten Toleranzen der gewünschten elektrischen Ausgangsleistung unter Verwendung der Effizienzdatenbank zur Optimierung des effizienten Betriebs des motorbetriebenen elektrischen Generators für den Kraftstoffverbrauch bei gleichzeitiger Bereitstellung der gewünschten elektrischen Ausgangsleistung innerhalb der spezifizierten Toleranzen der gewünschten elektrischen Ausgangsleistung zu erzeugen,
**dadurch gekennzeichnet, dass** der Schritt des Einstellens des zugeführten Kraftstoffs weiter die Schritte umfasst von:
Bestimmen eines Maximal/Minimalwertes für die gewünschte elektrische Ausgangsleistung basierend auf der gewünschten elektrischen Ausgangsleistung und den spezifizierten Toleranzen;
Finden eines neuen Sollwerts für elektrische Ausgangsleistung innerhalb des Maximal/Minimalwerts in der Effizienzdatenbank; und
Ersetzen eines aktuellen Sollwerts für elektrische Ausgangsleistung, mit der der motorbetriebene elektrische Generator betrieben wird, durch den neuen Sollwert für elektrische Ausgangsleistung aus der Effizienzdatenbank, wenn der neue Sollwert einer höheren Betriebseffizienz des motorbetriebenen elektrischen Generators als der aktuelle Sollwert entspricht.

2. Verfahren nach Anspruch 1, wobei das Füllen der Effizienzdatenbank während eines Initialisierungsvorgangs unter Verwendung vorbestimmter Daten durchge-führt wird.

3. Verfahren nach Anspruch 1, wobei das Füllen der Effizienzdatenbank durch dynamisches und kontinuierliches Selbstfüllen während des Betriebs des motorbetriebenen elektrischen Generators erfolgt.

4. System zum Managen eines motorbetriebenen elektrischen Generators, umfassend:
einen Effizienzrechner, der konfiguriert ist, um eine Effizienzdatenbank mit zugeführten Kraftstoff- und elektrischen Ausgangsleistungsdaten für einen effizienten Betrieb des motorbetriebenen elektrischen Generators zu füllen; und
eine Steuerung, die konfiguriert ist, um eine gewünschte elektrische Ausgangsleistung des motorbetriebenen elektrischen Generators zu empfangen, spezifizierte Toleranzen der gewünschten elektrischen Ausgangsleistung zu empfangen; dem motorbetriebenen elektrischen Generator zugeführten Kraftstoff einzustellen, um die gewünschte elektrische Ausgangsleistung innerhalb der spezifizierten Toleranzen der gewünschten elektrischen Ausgangsleistung unter Verwendung der Effizienzdatenbank zur Optimierung des effizienten Betriebs des motorbetriebenen elektrischen Generators für den Kraftstoffverbrauch bei gleichzeitiger Bereitstellung der gewünschten elektrischen Ausgangsleistung innerhalb der spezifizierten Toleranzen der gewünschten elektrischen Ausgangsleistung zu erzeugen,
**dadurch gekennzeichnet, dass** die Steuerung den neuen Sollwert bestimmt durch:
Bestimmen eines Maximal/Minimalwertes für die gewünschte elektrische Ausgangsleistung basierend auf der gewünschten elektrischen Ausgangsleistung und den spezifizierten Toleranzen;
Finden des neuen Sollwerts für elektrische Ausgangsleistung innerhalb des Maximal/Minimalwerts in der Effizienzdatenbank, und dass
die Steuerung dem motorbetriebenen elektrischen Generator zugeführten Kraftstoff einstellt durch:
Ersetzen eines aktuellen Sollwerts für elektrische Ausgangsleistung, mit der der motorbetriebene elektrische Generator betrieben wird, durch den neuen Sollwert für elektrische Ausgangsleistung aus der Effizienzdatenbank, wenn der neue Sollwert einer höheren Betriebseffizienz des motorbetriebenen elektrischen Generators als der aktuelle Sollwert entspricht.

5. System nach Anspruch 4, wobei der Effizienzrechner den Sollwert auf einer im Wesentlichen kontinuierlichen Basis während des Betriebs des motorbetriebenen elektrischen Generators bestimmt.

6. System nach Anspruch 4, weiter umfassend eine digitale Motorsteuereinheit oder einen analogen Sender, um die Kraftstoffdaten für die Effizienzdatenbank bereitzustellen.

7. System nach Anspruch 4, weiter umfassend eine elektrische Messvorrichtung, um die elektrischen Ausgangsleistungsdaten für die Effizienzdatenbank bereitzu-stellen.

8. System nach Anspruch 4, weiter umfassend einen Stabilitätsrechner, der einen Mittelungsalgorithmus verwendet, um variable Effizienzen beim Beschleunigen und Verzögern des motorbetriebene elektrischen Generators anzupassen.

9. System nach Anspruch 4, wobei der Stabilitätsrechner darauf wartet, dass sich ein Effizienzmesswert stabilisiert, bevor er bestimmt, dass ein Effizienzmesswert für die Effizienzdatenbank gültig ist, wenn sich Werte ändern.

10. System nach Anspruch 4, weiter umfassend einen Regler, um das Erzeugen der gewünschten elektrischen Ausgangsleistung zu steuern.

## Revendications

1. Procédé de gestion d'un générateur électrique entraîné par moteur, ledit procédé comprenant les étapes de :
la population d'une base de données de rendement avec du carburant fourni à un moteur et des données de sortie de puissance électrique du générateur électrique entraîné par moteur ;
la réception d'une sortie de puissance électrique souhaitée du générateur électrique entraîné par moteur,
la réception de tolérances spécifiées de la sortie de puissance électrique souhaitée ;
l'ajustement de carburant fourni au générateur électrique entraîné par moteur pour générer la sortie de puissance électrique souhaitée dans les tolérances spécifiques de la sortie de puissance électrique souhaitée en utilisant la base de données de rendement pour optimiser le fonctionnement efficient du générateur électrique entraîné par moteur pour la consommation de carburant tout en fournissant toujours la sortie de puissance électrique souhaitée dans les tolérances spécifiées de la sortie de puissance électrique souhaitée,
**caractérisé en ce que** l'étape d'ajustement de carburant fourni comprend en outre les étapes de :
la détermination d'une valeur maximum/minimum pour la sortie de puissance électrique souhaitée sur la base de la sortie de puissance électrique souhaitée et des tolérances spécifiques ;
la découverte d'un nouveau point de consigne pour la sortie de puissance électrique dans la valeur maximum/minimum dans la base de données de rendement; et
la substitution d'un point de courant actuel pour la sortie de puissance électrique actionnant le générateur électrique entraîné par moteur par le nouveau point de consigne pour la sortie de puissance électrique de la base de données de rendement, lorsque le nouveau point de consigne correspond à un rendement de service supérieur du générateur électrique entraîné par moteur à celle du point de courant actuel.

2. Procédé selon la revendication 1, dans lequel la population de la base de données de rendement est effectuée pendant une opération d'initialisation en utilisant des données prédéterminées.

3. Procédé selon la revendication 1, dans lequel la population de la base de données de rendement est par autopopulation dynamique et continue pendant le fonctionnement du générateur électrique entraîné par moteur.

4. Système de gestion d'un générateur électrique entraîné par moteur comprenant : un calculateur de rendement configuré pour la population d'une base de données de rendement avec du carburant fourni et des données de sortie de puissance électrique pour le fonctionnement efficient du générateur électrique entraîné par moteur ; et
un dispositif de commande configuré pour recevoir une sortie de puissance électrique souhaitée du générateur électrique entraîné par moteur, recevoir des tolérances spécifiées de la sortie de puissance électrique souhaitée ; ajuster du carburant fourni au générateur électrique entraîné par moteur pour générer la sortie de puissance électrique souhaitée dans les tolérances spécifiées de la sortie de puissance électrique souhaitée en utilisant la base de données de rendement pour optimiser le fonctionnement efficient du générateur électrique entraîné par moteur pour la consommation de carburant tout en fournissant toujours la sortie de puissance électrique souhaitée dans les tolérances spécifiées de la sortie de puissance électrique souhaitée,
**caractérisé en ce que** le dispositif de commande détermine le nouveau point de consigne par :
la détermination de la valeur maximum/minimum pour la sortie de puissance électrique souhaitée sur la base de la sortie de puissance électrique souhaitée et des tolérances spécifiées ;
la découverte du nouveau point de consigne pour la sortie de puissance électrique dans la valeur maximum/minimum dans la base de données de rendement, et **en ce que** le dispositif de commande ajuste le carburant fourni au générateur électrique entraîné par moteur par :
la substitution du générateur électrique entraîné par moteur par le nouveau point de consigne pour la sortie de puissance électrique de la base de données de rendement, lorsque le nouveau point de consigne correspond à un rendement de fonctionnement supérieure du générateur électrique entraîné par moteur à celle du point de consigne actuel.

5. Système selon la revendication 4, dans lequel le calculateur de rendement détermine le point de consigne sur une base sensiblement continue pendant le fonctionnement du générateur électrique entraîné par moteur.

6. Système selon la revendication 4, comprenant en outre une unité de commande de moteur numérique ou un transmetteur analogique pour fournir les données de carburant pour la base de données de rendement.

7. Système selon la revendication 4, comprenant en outre un dispositif de mesure électrique pour fournir les données de sortie de puissance électrique pour la base de données de rendement.

8. Système selon la revendication 4, comprenant en outre un calculateur de stabilité employant un algorithme de calcul de moyenne pour s'adapter à des rendements variables pendant l'accélération et la décélération du générateur électrique entraîné par moteur.

9. Système selon la revendication 4, dans lequel le calculateur de stabilité attend la stabilisation d'une lecture de rendement avant que la détermination d'une lecture de rendement ne soit valide pour la base de données de rendement lorsque des valeurs changent.

10. Système selon la revendication 4, comprenant en outre un régulateur pour commander la génération de la sortie de puissance électrique souhaitée.
